# EUROPÄISCHE PATENTSCHRIFT

(11) **EP 0 515 431 B1**
(45) Veröffentlichungstag und Bekanntmachung des Hinweises auf die Patenterteilung: **17.08.1994**
(21) Anmeldenummer: 91903433.0
(22) Anmeldetag: 06.02.1991
(51) Int. Cl.: H04B 1/64, H04H 1/00

(54) **VERFAHREN ZUR RUNDFUNKÜBERTRAGUNG EINES ZEITLICH VARIIERENDEN STEUERSIGNALS UND ZUM EMPFANGEN EINES DERARTIGEN STEUERSIGNALS**
PROCESS FOR RADIO TRANSMISSION OF A TIME-VARIANT CONTROL SIGNAL AND FOR RECEIVING SUCH A CONTROL SIGNAL
PROCEDE POUR LA TRANSMISSION RADIO D'UN SIGNAL D'ENTREE VARIANT EN FONCTION DU TEMPS ET POUR LA RECEPTION D'UN TEL SIGNAL

(30) Priorität: 14.02.1990 DE 4004576
(43) Veröffentlichungstag der Anmeldung: 02.12.1992
(73) Patentinhaber: Thomson Consumer Electronics Sales GmbH, 30453 Hannover (DE)
(72) Erfinder: EINSEL, Robert, D-3100 Celle (DE)
(86) Internationale Anmeldenummer: EP9100224
(87) Internationale Veröffentlichungsnummer: WO9112674

(56) Entgegenhaltungen:
- DE-A- 3 131 303
- US-A- 4 314 372
- Patent Abstracts of Japan, Band 7, Nr. 190, E194 & JP-A-58- 92161

## Beschreibung

Die Erfindung bezieht sich auf ein Übertragungsverfahren gemäß dem Oberbegriff des Patentanspruchs 1 sowie auf ein Empfangsverfahren gemäß dem Oberbegriff des Patentanspruchs 5.

Ein solches Verfahren ist beispielsweise aus der weiter unten erörterten DE-A-33 11 646 bekannt.

Bei der Rundfunkübertragung von Hörfunkprogrammsignalen ist es erforderlich, die Signaldynamik, d.h. die Pegeldifferenz zwischen den leisesten und den lautesten Tönen, einzuengen, um zum einen die untere Pegelgrenze über den Rauschpegel der Übertragungsstrecke anzuheben und zum anderen die obere Pegelgrenze unterhalb der Aussteuergrenze des Rundfunkkanals zu halten, die von dem maximalen Frequenzhub, z.B. 50 kHz bei UKW, abhängt. Beispielsweise wird die ursprüngliche Dynamik eines zur Sendung vorgesehenen Compact-Disc-Signals von 70 dB auf 35 bis 40 dB eingeengt.

Diese Einengung erfolgt im Sendestudio durch den Tonmeister, bevor das Programmsignal als stereofones Links(L)- und Rechts(R)-Signal an den Sender übertragen wird, wo im Falle einer herkömmlichen UKW-Ausstrahlung durch (L+R)- und (L-R)-Matrizierung und FM-Modulation des (L-R)-Signals mit 38 kHz Trägerunterdrückung ein Multiplexsignal erzeugt wird, das dem RF-Träger (Sendefrequenz) in Frequenzmodulation aufmoduliert wird.

Da die Dynamikeinengung zu Klangverfälschungen führt, ist vorgeschlagen worden, mit dem Programmsignal eine Aussteuergröße als Steuersignal zu übertragen, welches die Dynamikeinengung repräsentiert und von einem Hörfunkempfänger benutzt werden kann, um die originale Dynamik zumindest teilweise zu rekonstruieren. Das zeitlich variierende Steuersignal für diese sog. "variable Dynamik" muß zeitlich exakt zu dem Programmsignal korreliert sein, da sich dessen Dynamik und damit dessen Aussteuerung laufend ändert.

Um diese Korrelation zu gewährleisten, ist es bekannt (DE-A-33 11 646), das Steuersignal dem tieffrequenten Randbereich des Nutzsignals unterhalb 100 Hz zuzusetzen, was ohne hörbare Beeinflussung des Nutzsignals möglich sein soll. Indessen ist die Übertragungskapazität am tieffrequenten Randbereich relativ gering, was die Auflösung des Steuersignals beeinträchtigt. Ferner ist der tieffrequente Randbereich besonders störempfindlich, beispielsweise gegen Netzbrummen, so daß insgesamt die Steuersignalübertragung in diesem Bereich des Nutzsignalbandes problematisch ist.

Eine Übertragung des genannten Steuersignals innerhalb des Radiodatensystems "RDS" (siehe Doc. Tech. Nr. 3244-E der Europäischen Rundfunkunion) scheitert offenbar an den Besonderheiten des RDS-Systems. Bei den Zusatzinformationen des RDS-Systems handelt es sich um statische Daten, die am Sender gespeichert und durch einen studioseitigen Fernwirkbefehl ohne zeitkritischen Bezug zum Programmsignal ausgelesen werden. Die ausgelesenen RDS-Daten werden in einem genormten Datenformat zusammengestellt und einem 57 kHz-Hilfsträger in 2-PSK-Modulation aufmoduliert. Der modulierte Hilfsträger wird in das Multiplexsignal (das erst am Sender erzeugt wird) eingefügt, was der Grund dafür ist, daß die RDS-Coder einschließlich Datenspeicher am Sender und nicht im Studio angeordnet sind. Das so ergänzte Multiplexsignal wird dann dem RF-Träger in FM aufmoduliert. Da die Auslesung und Formatierung der RDS-Daten zeitlich zum Programmsignal nicht exakt korreliert ist (was wegen ihres statischen Charakters auch nicht nötig ist), eignet sich das derzeit praktizierte RDS-System nicht zur Übertragung der erwähnten Steuersignale für die variable Dynamik.

Der Erfindung liegt die Aufgabe zugrunde, sender- und empfängerseitige Maßnahmen anzugeben, um das zeitkritische Steuersignal für variable Dynamik übertragen und empfangen zu können.

Diese Aufgabe wird erfindungsgemäß für die Senderseite durch die in Patentanspruch 1 und für die Empfängerseite durch die in Patentanspruch 5 angegebenen Merkmale gelöst.

Die Erfindung beruht auf der Überlegung, bei Verwendung des RDS-Systems zur Übertragung des Steuersignals für die variable Dynamik den RDS-Datenstrom einschließlich der darin eingefügten Steuersignaldaten vollständig im Sendestudio zu erzeugen, also dort, wo eine exakte zeitliche Korrelation zu dem Nutzsignal, d.h. dem Hörfunkprogrammsignal, gewährleistet werden kann. Der RDS-Datenstrom wird zeitgleich mit dem (etwa als L- und als R-Signal vorliegenden stereofonen) Hörfunkprogrammsignal zu den Muttersendern eines Versorgungsgebietes (z.B. des Norddeutschen Rundfunks) übertragen, wo der RDS-Datenstrom einem Hilfsträger (beispielsweise 57 kHz) aufmoduliert und in das aus den L- und den R-Signalen des Hörfunkprogrammsignals gewonnene Multiplexsignal eingefügt wird. Verzögerungen, die bei dem derzeit praktizierten RDS-System durch die Auslesung und Formatierung der RDS-Daten am Muttersender entstehen, werden auf diese Weise vermieden.

Infolge der damit ermöglichten Nutzung des RDS-Systems für die Übertragung des Steuersignals für die variable Dynamik läßt sich das Steuersignal mit einer wesentlich größeren Übertragungskapazität und damit Auflösung übertragen, als dies bei der bekannten Übertragung am tieffrequenten Bandende des Nutzsignals möglich ist. Ferner ist die Störempfindlichkeit des auf einem 57 kHz-Hilfsträger aufmodulierten RDS-Datenstroms erheblich geringer als das am tieffrequenten Bandende eingelagerte Steuersignal, womit sich insgesamt eine wesentlich verbesserte Übertragung für das Steuersignal der variablen Dynamik ergibt.

Dementsprechend verbessert zeigt sich auch der Empfang und die empfängerseitige Auswertung des übertragenen Steuersignals. Dabei kommt noch hinzu, daß für das RDS-System und das darin eingefügte Steuersignal die empfängerseitigen Komponenten zur Demodulation und Decodierung bereits verfügbar sind, so daß sich eine zusätzliche Empfängerausrüstung auf einen Baustein zur Auswertung des im RDS-Baustein demodulierten und decodierten Steuersignals beschränken kann.

Weitere Merkmale, Vorteile und Einzelheiten der Erfindung werden nachfolgend anhand zweier in der Zeichnung veranschaulichten Ausführungsbeispiele näher erläutert. Dabei zeigen:
- Fig. 1: eine schematische Darstellung der Rundfunkversorgung eines aus zwei Teilgebieten bestehenden Sendegebietes nach dem erfindungsgemäßen Übertragungsverfahren;
- Fig. 2: ein Blockschaltbild eines für das Übertragungsverfahren gemäß Fig. 1 angepaßten Muttersenders und
- Fig. 3: ein Blockschaltbild eines erfindungsgemäßen Hörfunkempfängers zum Empfangen und Auswerten des gemäß dem Übertragungsverfahren nach Fig. 1 ausgestrahlten Steuersignals für die variable Dynamik.

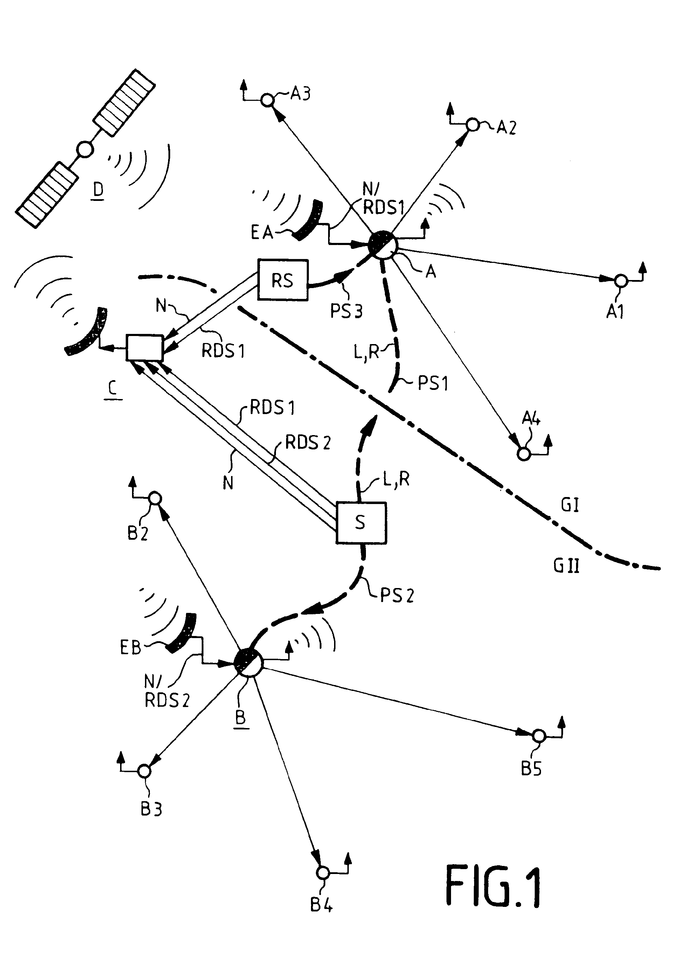

Das der Darstellung in Fig. 1 zugrundegelegte Rundfunkversorgungsgebiet für die UKW-Versorgung mit z.B. dem ersten Hörfunkprogramm des Norddeutschen Rundfunks, NDR 1, weist ein erstes Teilgebiet GI (z.B. Schleswig-Holstein) und ein zweites Teilgebiet GII (z.B. Hamburg) auf. Das Hörfunkprogramm, hier NDR 1, wird zu bestimmten Zeiten "regionalisiert", das heißt, daß in den beiden Teilgebieten GI, GII zu bestimmten Sendezeiten dasselbe Programm und zu bestimmten anderen Sendezeiten unterschiedliche Programme ausgestrahlt werden. Da während einer solchen "Regionalisierung" die RDS-Informationen beispielsweise für Programmname (PS), Programmidentifikationsnummer (PI) und alternative Frequenzen (AF) unterschiedlich sind, muß dieser speziellen Gegebenheit in noch zu beschreibender Weise Rechnung getragen werden.

Das Versorgungsgebiet weist ein Hauptsendestudio S auf, welches das überregionale Hörfunkprogramm sowie das regionale Programm für das zweite Teilgebiet GII produziert. Ein davon örtlich entferntes Regionalstudio RS produziert nur das regionale Programm für das erste Teilgebiet GI. Die beiden Studios S und RS sind über eine Postkabelstrecke PS2 bzw. PS3 mit einem Muttersender B (für das zweite Teilgebiet GII) bzw. A (für das erste Teilgebiet GI) verbunden. Ferner ist das Hauptsendestudio S über eine Postkabelstrecke PS1 mit dem Muttersender A verbunden. Im Falle eines überregionalen Programms versorgt das Hauptsendestudio S beide Muttersender A und B mit dem Hörfunkprogrammsignal, das als Links(L)- und Rechts(R)-Signal auf den Postkabelstrecken PS1 und PS2 übertragen wird. Im Falle einer Regionalsendung für das zweite Teilgebiet GII versorgt das Hauptsendestudio S nur den Muttersender B mit dem "GII"-Programmsignal, während das Regionalstudio RS nur den Muttersender A mit dem "GI"-Programmsignal versorgt.

Der Muttersender A ist über Leitungen oder Ballempfangsstrekken mit Tochtersendern A1 bis A4 verbunden, während der Muttersender B in ähnlicher Weise mit Tochtersendern B1 bis B4 verbunden ist.

Zusätzlich oder anstelle der Verbindungen über die Postkabelstrecken PS1 bis PS3 können die Studios S und RS über Digitalstrecken N/RDS1/RDS2 bzw. N/RDS1 mit einer Erdfunkstelle C einer Satellitenübertragungsstrecke verbunden sein. Diese führt von der Erdfunkstelle C über einen Rundfunksatelliten D zu Parabolempfangsantennen EA bzw. EB von Satellitenempfangsanlagen an den Standorten der Muttersender A bzw. B.

Da - wie schon erwähnt - bei der "Regionalisierung" des Programms, hier NDR 1, unterschiedliche RDS-Daten für die beiden Teilgebiete GI, GII auszusenden sind, weist die Satellitenübertragungsstrecke einen einzigen digitalen Nutzsignalkanal N und zwei getrennte, mit RDS1 und RDS2 bezeichnete Zusatzsignalkanäle aus. Der Muttersender A empfängt neben dem digitalen Nutzsignalkanal N nur den einen Zusatzsignalkanal RDS1, wohingegen der Muttersender B neben dem digitalen Nutzsignalkanal N nur den anderen Zusatzsignalkanal RDS2 empfängt. Im Falle einer überregionalen Sendung (die nur vom Hauptsendestudio S ausgeht) sind die RDS-Daten für die Zusatzsignalkanäle RDS1 und RDS2 identisch.

Erfindungswesentlich ist, daß die RDS-Daten bereits in dem Hauptsendestudio S und gegebenenfalls in dem Regionalstudio RS erzeugt und formatiert werden, wobei die zeitkritischen Steuersignale für die variable Dynamik exakt zeitkorreliert zu dem Nutzsignal (analog oder digital) mit einer gesonderten Kennung in den RDS-Datenstrom eingefügt und an die Muttersender A, B übertragen werden.

Die Muttersender A, B empfangen in noch zu beschreibender Weise den zugeordneten RDS-Datenstrom mit dem Steuersignal für die variable Dynamik und fügen den empfangenen RDS-Datenstrom zeitkorreliert in das Multiplexsignal ein, welches aus den L- und R-Signalen des an den Muttersendern A, B empfangenen Nutzsignals durch Matrizierung und FM-Modulation mit 38 kHz-Trägerunterdrückung gebildet wird.

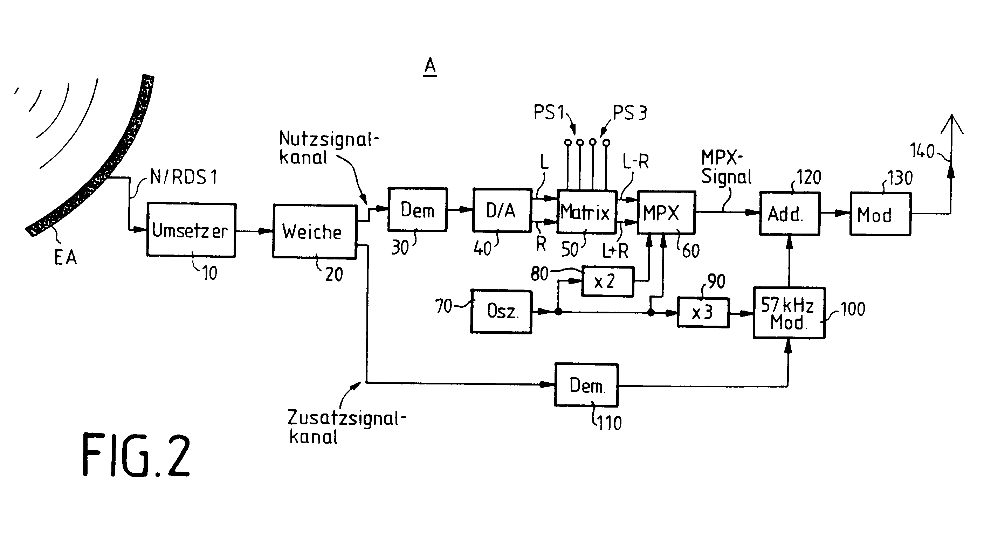

Der in Fig. 2 anhand eines Blockschaltbildes schematisch dargestellte Muttersender A hat denselben Aufbau wie der Muttersender B. Über die Parabolempfangsantenne EA empfängt der Muttersender A die von dem Rundfunksatelliten D übertragenen Nutzsignal- und Zusatzsignalkanäle N und RDS1. In dem Umsetzer 10 (Outdoor-Unit) erfolgt eine Umsetzung der 12 GHz-RF-Frequenz auf etwa 800 kHz, worauf in einer Kanalweiche 20 eine Aufspaltung in den Nutzsignalkanal und den Zusatzsignalkanal erfolgt.

Das Nutzsignal N wird zunächst in einem Demodulator 30 demoduliert. Das so erhaltene Basisbandsignal wird in einem Digital/Analog-Wandler 40 in ein ananloges Signal rückgewandelt, worauf die sich ergebenden L- und R-Signale einer Stereomatrix 50 zugeführt werden, um die Matrizierungen L+R und L-R entsprechend der UKW-Norm zu erhalten. Die matrizierten Signale werden in einem Multiplexer 60 in ein Multiplexsignal umgewandelt, bei welchem das (L+R)-Signal in der Frequenzlage 0 - 15 kHz und das (L-R)-Signal in der Frequenzlage 23 - 53 kHz angeordnet werden. Hierzu wird das (L-R)-Signal einem 38 kHz-Träger in FM aufmoduliert, welcher anschließend unterdrückt wird. Ferner wird ein 19 kHz-Pilotton in die Frequenzlücke zwischen dem (L+R)- und dem (L-R)-Band eingefügt. Der 19 kHz-Pilotton wird einem 19 kHz-Oszillator 70 entnommen, während der 38 kHz-Träger durch Verdoppelung des 19 kHz-Pilottons in einer Verdopplerstufe 80 gewonnen wird.

Das Multiplexsignal am Ausgang des Multiplexers 60 wird einer Addierstufe 120 zugeführt, deren zweiter Eingang mit einem 57 kHz-Modulator 100 verbunden ist. Dem Modulator 100 wird ein 57 kHz-Hilfsträger zugeführt, der durch Verdreifachung des 19 kHz-Pilottons in einer Verdreifacherstufe 90 erzeugt wird. Diesem Hilfsträger wird der RDS-Datenstrom direkt aufmoduliert (in 2-PSK-Modulation), welcher in dem Zusatzsignalkanal empfangen und dort von dem Demodulator 110 in die Basislage demoduliert wird. Eine Umcodierung des demodulierten RDS-Datenstroms ist nicht erforderlich.

Die Addierstufe 120 fügt den modulierten 57 kHz-Hilfsträger, der ihr über den Modulator 100 zugeleitet wird, in das von dem Multiplexer 60 kommende Multiplexsignal ein, das nach dieser Ergänzung in einem Modulator 130 auf den RF-Träger des Muttersenders A in FM aufmoduliert und als Rundfunksignal über die Sendeantenne 140 abgestrahlt wird. Infolge des im wesentlichen verzögerungsfreien Empfangs des RDS-Datenstroms mit dem Steuersignal für variable Dynamik läßt sich eine exakt zeitkorrelierte Einfügung des modulierten RDS-Datenstroms in das Multiplexsignal gewährleisten. Ein etwaiger Zeitversatz zwischen dem Nutzsignal- und dem Zusatzsignalkanal, wie er beispielsweise durch unterschiedlichen Schaltungsaufbau in den beiden Signalverarbeitungszweigen oder durch unterschiedliche Übertragungsstrecken - beispielsweise Nutzsignalkanal über Postkabelstrecke 1, Zusatzsignalkanal über Satellitenübertragungsstrecke - hervorgerufen sein kann, läßt sich durch geeignete Einrichtungen wie Laufzeitglieder, Verzögerungsleitungen o. dgl. korrigieren.

Auch im Falle einer ausschließlichen oder zusätzlichen Zuführung des Nutzsignals über Postkabelverbindung (hier PS1 und PS3) wird der RDS-Datenstrom über die Satellitenübertragungsstrecke zu den Muttersendern A, B übertragen. Die Stereomatrix 50 weist zusätzliche Eingänge für den Anschluß der Postkabelverbindungen auf. Die zusätzliche Postkabelzufuhr des Nutzsignals hat eine Reservefunktion für den Fall, daß die Satellitenübertragung des Nutzsignals gestört ist.

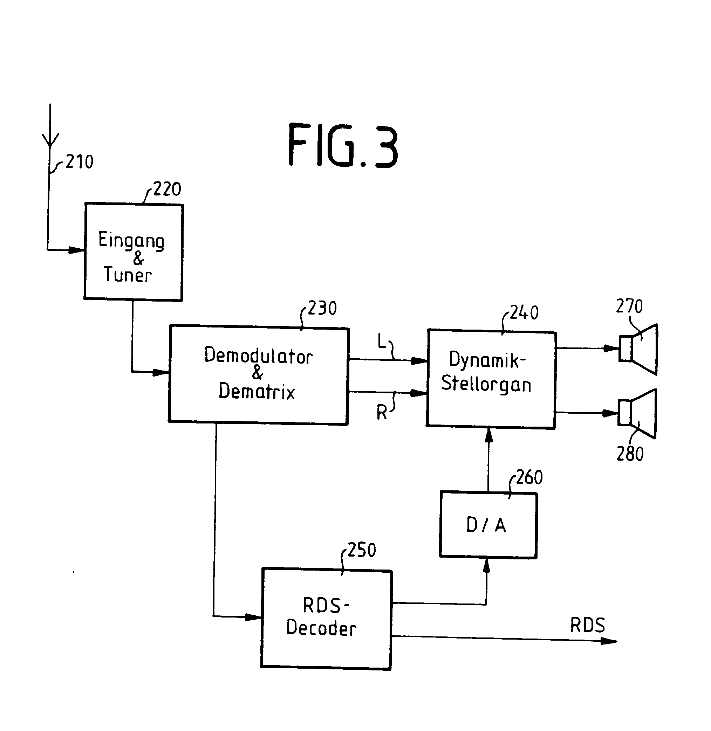

Ein in Fig. 3 dargestellter Hörfunkempfänger führt das an einer Empfangsantenne 210 anliegende Antennensignal einer Eingangs- und Tunerstufe 220 zu, wo das gewünschte Rundfunksignal aus dem Antennensignal gewonnen und einer Demodulator- und Dematrizierungsstufe 230 zugeführt wird. In der Stufe 230 wird durch FM-Demodulation des RF-Trägers das Multiplexsignal gewonnen, aus welchem das (L+R)-Signal und durch FM-Demodulation des unterdrückten 38 kHz-Trägers das (L-R)-Signal abgetrennt werden. Durch Dematrizierung der (L+R)- und (L-R)-Signale erhält man am Ausgang der Stufe 230 als NF-Signale die stereofonen Links(L)- und Rechts(R)-Signale, welche einem Dynamikstellorgan 240 zugeführt werden.

Aus dem Multiplexsignal wird in der Stufe 230 ferner der 57 kHz-Träger abgetrennt und demoduliert, wobei der daraus resultierende RDS-Datenstrom einem RDS-Decoder 250 zugeleitet wird. In dem RDS-Decoder 250 wird das darin eingefügte Steuersignal für die variable Dynamik anhand seiner erwähnten Kennung von den übrigen Teilen des RDS-Datenstroms abgetrennt, decodiert und einem Digital/Analog-Wandler 260 zugeführt, welcher aus dem digitalen Steuersignal ein analoges Steuersignal erzeugt. Dieses analoge Steuersignal steuert das Dynamikstellorgan 240 in der Weise, daß die originale Dynamik des stereofonen Hörfunkprogrammsignals ganz oder zumindest teilweise rekonstruiert wird. Das rekonstruierte stereofone Signal wird mittels Lautsprecher 270, 280 wiedergegeben. Die übrigen Teile des RDS-Datenstroms werden in dem RDS-Decoder 250 decodiert und als RDS-Informationen zur weiteren Verwendung in dem Empfänger zur Verfügung gestellt.

## Patentansprüche

1. Verfahren zur Rundfunkübertragung eines zeitlich variierenden Steuersignals in exakter zeitkorrelierter Zuordnung zu einem stereofonen Hörfunkprogrammsignal, wobei das Steuersignal eine Information über die variierende Aussteuerung des ursprünglichen Hörfunkprogrammsignals enthält und empfangsseitig dazu verwendet wird, um bei der Wiedergabe des Hörfunkprogrammsignals die sendestudioseitige Aussteuerung zumindest teilweise im Sinne einer variablen Dynamik rückgängig zu machen, dadurch gekennzeichnet, daß das zeitlich variierende Steuersignal in den Datenstrom eines Radiodatensignals (RDS-Signal) sendestudioseitig als Ergänzung datenformatgerecht eingefügt wird und gegenüber den restlichen Informationen des Datenstroms unterscheidbar ist, daß das auf diese Weise ergänzte Radiodatensignal vom Sendestudio (S, RS) zu terrestrischen Sendern (A, B) übertragen wird, und daß das an den Sendern empfangene ergänzte Radiodatensignal jeweils einem Hilfsträger aufmoduliert, in das als Multiplexsignal vorliegende, ausgesteuerte Hörfunkprogrammsignal zeitkorrelliert eingefügt und zusammen mit dem Multiplexsignal terrestrisch abgestrahlt wird.

2. Verfahren nach Anspruch 1, **dadurch gekennzeichnet**, daß das datenformatgerecht eingefügte Steuersignal eine Kennung aufweist, welche das Steuersignal gegenüber den restlichen Informationen des Datenstroms des Radiodatensignals unterscheidet.

3. Verfahren nach Anspruch 1 oder 2, **dadurch gekennzeichnet**, daß das ergänzte Radiodatensignal vom Sendestudio über eine Satellitenübertragungsstrecke zu terrestrischen Sendern übertragen wird.

4. Verfahren nach Anspruch 3, **dadurch gekennzeichnet,** daß das ausgesteuerte Hörfunkprogrammsignal zusammen mit dem ergänzten Radiodatensignal vom Sendestudio über eine Satellitenübertragungsstrecke zu terrestrischen Sendern in digitaler Codierung übertragen wird, wo es in ein analoges Signal umgewandelt wird, aus welchem das Multiplexsignal gebildet wird.

5. Verfahren zum Empfang eines entsprechend dem Verfahren nach einem der Ansprüche 1 bis 4 übertragenen Steuersignals, bei dem
- der modulierte Hilfsträger von dem Nutzsignalanteil des empfangenen Multiplexsignals abgetrennt wird,
- das auf dem Hilfsträger aufmodulierte Radiodatensignal (RDS) demoduliert wird, und
- das demodulierte Radiodatensignal decodiert wird,
**dadurch gekennzeichnet,** daß aus dem Datenstrom des demodulierten oder decodierten Radiodatensignals (RDS) das variierende Steuersignal abgetrennt und nach gegebenenfalls vorgenommener Decodierung zur Steuerung der Dynamik (Pegeldifferenz zwischen den leisesten und lautesten Tönen) des wiedergegebenen Nutzsignalanteils des Multiplexsignals verwendet wird.

6. Verfahren nach Anspruch 5, **dadurch gekennzeichnet**, daß die Abtrennung des Steuersignals aus dem RDS-Datenstrom anhand seiner Kennung erfolgt.

7. Verfahren nach Anspruch 5 oder 6, **dadurch gekennzeichnet**, daß das Steuersignal im Empfänger über einen Digital/Analog-Wandler geleitet und erst danach über ein Stellorgan zur Steuerung der Dynamik verwendet wird.

## Claims

1. Method for the broadcast transmission of a time varying control signal having an exactly time-correlated association with a stereophonic radio programme signal, wherein the control signal contains an item of information regarding the varying level control of the original radio programme signal and is used at the receiving end to at least partially cancel the level control effected at the transmitting studio end in the sense of a variable dynamic range, characterised in that, the time varying control signal is inserted into the data stream of a radio data signal (RDS signal) at the transmitting studio end as a supplement having the correct data format and is distinguishable with respect to the remaining items of information of the data stream, that the radio data signal supplemented in this manner is transmitted from the transmitting studio (S, RS) to terrestrial transmitters (A, B) and that the supplemented radio data signal received at the transmitters is modulated on each occasion onto a sub carrier, is inserted in time correlated manner into the level controlled radio programme signal which exists as a multiplex signal and is beamed terrestrially together with the multiplex signal.

2. Method in accordance with Claim 1, characterised in that, the control signal inserted with the correct data format comprises an item of identification which distinguishes the control signal with respect to the remaining items of information of the data stream of the radio data signal.

3. Method in accordance with Claim 1 or 2, characterised in that, the supplemented radio data signal is transmitted from the transmitting studio via a satellite communication link to terrestrial transmitters.

4. Method in accordance with Claim 3, characterised in that, the level controlled radio programme signal together with the supplemented radio data signal is transmitted using a digital coding from the transmitting studio via a satellite communication link to terrestrial transmitters where it is converted into an analogue signal from which the multiplex signal is formed.

5. Method for the reception of a control signal transmitted in accordance with the method according to any of the Claims 1 to 4, in which,
- the modulated sub carrier is separated from the useful signal component of the received multiplex signal,
- the radio data signal (RDS) modulated onto the sub carrier is demodulated and
- the demodulated radio data signal is decoded,
characterised in that, the varying control signal is separated from the demodulated or decoded radio data signal (RDS) and, after a decoding has occurred if necessary, is used for the control of the dynamic range (level difference between the quietest and the loudest sounds) of the reproduced useful signal component of the multiplex signal.

6. Method in accordance with Claim 5 characterised in that, the separation of the control signal from the RDS data stream occurs on the basis of its item of identification.

7. Method in accordance with Claim 5 or 6, characterised in that, the control signal is conducted via a digital/analogue converter in the receiver and only thereafter is used for controlling the dynamic range by means of an adjusting member.

## Revendications

1. Procédé pour la transmission radio d'un signal de commande qui varie dans le temps en correspondance corrélée dans le temps de manière exacte avec un signal de programme radiophonique stéréophonique, le signal de commande recevant une information sur le réglage maximal qui varie du signal de programme radiophonique d'origine et étant utilisé côté réception pour annuler, lors de la réception du signal de programme radiophonique, le réglage maximal côté studio émetteur tout au moins partiellement dans l'esprit d'une dynamique variable, **caractérisé en ce** que le signal de commande qui varie dans le temps est inséré dans le flux de données d'un signal de données radio (signal RDS) côté studio émetteur comme complément en étant de format de données conforme et en pouvant être distingué du reste des informations du flux de données, que le signal de données radio complété de cette manière est transmis par le studio émetteur (S, RS) à des émetteurs terrestres (A, B) et que le signal de données radio complété reçu sur ces émetteurs est modulé respectviement sur une sous-porteuse, est inséré en étant corrélé dans le temps dans le signal de programme radiophonique réglé au maximum, présent comme signal multiplex et étant émis de manière terrestre ensemble avec le signal multiplex.

2. Procédé selon la revendication 1, **caractérisé** **en ce** que le signal de commande inséré en étant de format de données conforme présente une identification qui distingue le signal de commande par rapport au reste des informations du flux de données du signal de données radio.

3. Procédé selon la revendication 1 ou 2, **caractérisé en ce** que le signal de données radio complété est transmis par le studio émetteur par une voie de transmission par satellite à des émetteurs terrestres.

4. Procédé selon la revendication 3, **caractérisé en ce** que le signal de programme radiophonique réglé au maximum est transmis en codage numérique, ensemble avec le signal de données radio complété, par le studio émetteur par l'intermédiaire d'une voie de transmission par satellite à des émetteurs terrestres où il est transformé en un signal analogique à partir duquel le signal multiplex est formé.

5. Procédé pour la réception d'un signal de commande transmis conformément au procédé selon l'une des revendications 1 à 4, dans lequel
- la sous-porteuse modulée est séparée de la fraction de signal utile du signal multiplex reçu,
- le signal de données radio (RDS) modulé sur la sous-porteuse est démodulé et
- le signal de données radio démodulé est décodé,
**caractérisé en ce** qu'à partir du flux de données du signal de données radio (RDS) démodulées ou décodées le signal de commande qui varie est séparé et est utilisé, après un décodage qui est éventuellement effectué, pour la commande de la dynamique (différence de niveau entre les sons les plus silencieux et les plus bruyants) de la fraction de signal utile reproduite du signal multiplex.

6. Procédé selon la revendication 5, **caractérisé en ce** que la séparation du signal de commande à partir du flux de données RDS se fait à l'aide de son identification.

7. Procédé selon la revendication 5 ou 6, **caractérisé en ce** que le signal de commande dans le récepteur est guidé par un convertisseur numérique/analogique et n'est utilisé qu'après, par un organe de réglage, pour la commande de la dynamique.
